(19) Europäisches Patentamt
European Patent Office
Office européen des brevets

(11) **EP 2 478 723 B1**

(12) **EUROPEAN PATENT SPECIFICATION**

(45) Date of publication and mention
of the grant of the patent:
**20.03.2019  Bulletin 2019/12**

(21) Application number: **09783104.4**

(22) Date of filing: **17.09.2009**

(51) Int Cl.:
*H04W 28/06* (2009.01)       *H04W 24/10* (2009.01)
*H04W 84/04* (2009.01)

(86) International application number:
**PCT/EP2009/062034**

(87) International publication number:
**WO 2011/032588 (24.03.2011 Gazette 2011/12)**

(54) **APPARATUSES AND METHODS FOR COORDINATED MULTIPOINT TRANSMISSION USING COMPRESSED FEEDBACK INFORMATION**

VORRICHTUNGEN UND VERFAHREN FÜR KOORDINIERTE MEHRPUNKTÜBERTRAGUNG MIT KOMPRIMIERTEN RÜCKKOPPLUNGSINFORMATIONEN

APPAREILS ET PROCÉDÉS DE TRANSMISSION COORDONNÉE MULTIPOINTS UTILISANT DES INFORMATIONS COMPRESSÉES DE RÉTROACTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**25.07.2012  Bulletin 2012/30**

(73) Proprietor: **Nokia Solutions and Networks Oy 02610 Espoo (FI)**

(72) Inventor: **ZIRWAS, Wolfgang 81249 München (DE)**

(74) Representative: **Nokia EPO representatives Nokia Technologies Oy Karaportti 3 02610 Espoo (FI)**

(56) References cited:
**EP-A2- 1 973 248        US-A1- 2002 058 501
US-A1- 2008 229 177     US-A1- 2009 063 705**

- **ALCATEL-LUCENT: "CQI and CSI Feedback Compression" 3GPP DRAFT; R1-092032_CSI_CQI_FEEDBACK_COMPR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), pages 1-3, XP050339500 [retrieved on 2009-04-28]**

**Description**

Technical field of the invention

The present invention relates to wireless communication in general. More particularly, it relates to a mobile communication device, a network node, a communication system, a method for signaling channel-dependent information and a method for receiving channel-dependent information. In particular, it relates to the transmission of channel dependent information for coordinated multipoint transmission.

Background of the invention

In wireless telecommunication systems, for a determination of a communication channel, information about the communication channel itself may be required to obtain a preferred communication with increased robustness, thus reduced interference.

A wireless communication connection however is not only influencing the connection between a dedicated mobile communication device and a network node, e.g. the base station of a provider network, but may also influence communication connections of other mobile communication devices situated in the vicinity.

Thus, for a preferred communication with increased robustness and reduced interference between adjacent mobile communication devices, knowledge about channel-dependent information of a plurality or all mobile communication devices arranged in such a distance to one another that they may influence one another's communication may be beneficial.

3GPP document R1-092032 discusses not "self-contained" feedback scheme for channel state information (CSI), i.e. feedback schemes exploiting some kind of memory in the feedback generation. Specifically, the document discloses signaling of average amplitudes of channel components on a long-term basis, while fast fading fluctuations of the channel components are signaled on a short-term basis.

Summary of the invention

There may be a need to provide not only information from a mobile communication device to a network node about its own communication channel, but also information, in particular channel-dependent information, of adjacently arranged mobile communication devices that may possibly interfere with the communication connection between that mobile communication device and the network node. There may in particular be a need for simplifying the allocation of resources for CSI reporting in a system using coordinated multipoint transmission.

Thus, a mobile communication device, a network node, a communication system, a method for signaling channel-dependent information, a method of receiving channel-dependent information, a computer-readable medium as well as a program element according to the independent claims are provided.

According to an exemplary embodiment of the present invention a mobile communication device is provided, comprising a sending and receiving unit and a processing unit. The sending and receiving unit is adapted for the transmission of a signal pattern over a communication channel, wherein the signal pattern comprises a logical data unit having a defined size. The processing unit is adapted for compressing information prior to transmission using a compression scheme, wherein the logical data unit is adapted for containing the compressed information for transmission.

According to a further exemplary embodiment of the present invention a network node is provided, comprising a sending and receiving unit, wherein the sending and receiving unit is adapted for the transmission of a signal pattern over a communication channel. The signal pattern comprises a logical data unit having a defined size. The logical data unit comprises compressed information and the network node is adapted to receive the signal pattern comprising the logical data unit from a mobile communication device.

According to a further exemplary embodiment of the present invention a communication system is provided, comprising at least one mobile communication device according to the present invention and at least one network node according to the present invention, wherein the at least one mobile communication device and the at least one network node are operatively coupled for the transmission of a signal pattern. The at least one mobile communication device is adapted to transmit a logical data unit of defined size comprising compressed information to at least one network node.

According to a further exemplary embodiment of the present invention a method for signaling channel dependent information is provided, comprising determining, by a determination unit, information for a transmission between a mobile communication device and a network node, wherein the transmission comprises a logical data unit having a defined size, generating, by a processing unit using a compression scheme, compressed information comprising the information and transmitting the logical data unit containing the compressed information by a sending and receiving unit.

According to a further exemplary embodiment of the present invention a method for receiving channel dependent information is provided, comprising receiving, by a sending and receiving unit, a transmission comprising a logical data unit of defined size containing compressed information.

According to a further exemplary embodiment of the present invention, a computer-readable medium is provided, comprising program code, which program code is adapted, when being executed by a processor, to carry out one of the method for signaling channel-dependent information and the method for receiving channel-dependent information.

According to a further exemplary embodiment of the present invention, a program element is provided, comprising a program, which program is adapted, when being executed by a processor, to carry out one of the method for signaling channel-dependent information and the method for receiving channel-dependent information.

Thus, it may be beneficial to not only take into account communication connections between mobile communication devices and a single network node, thus the same network node, e.g. a base station of a provider network, but also possible communication connections between mobile communication devices and further network nodes, with the further network nodes being arranged in the vicinity, in particular being constituting a cell directly adjacent to the network node's cell.

For example, a mobile communication device situated near the separation line of two wireless communication cells, the so called cell edge, being connected to the network node of one cell, may still interfere with a communication connection of a mobile communication device in connection with the network node of the adjacent cell, in particular due to the omnipolar propagation pattern of electromagnetic radiation.

Thus, it may in particular be beneficial to also take into account channel-dependent information of communication connections between mobile communication devices and all or at least a subgroup of adjacent cells to one's own cell. For minimizing interference, an according interference scenario may be referred to as inter-cell interference.

As a possibility to overcome inter-cell interference limitations, coordinated multipoint transmission (CoMP) may be employed. Most preferred performance gains may be obtained by e.g. employing joint pre-coding solutions. In joint pre-coding solutions, information regarding pre-coding of individual mobile communication devices may be shared among several network nodes and mobile communication devices for establishing preferred individual communications between the network nodes and the mobile communication devices.

Optimal performance may be achievable in case of a full network wide cooperation. However, this may require channel-dependent information, e.g. channel estimation, between all network nodes and all mobile communication devices.

Accordingly, a full network wide cooperation may result in a significant amount of information that would have to be shared among all network nodes and mobile communication devices, in particular requiring multi-casting of said feedback data from all mobile communication devices to all network nodes. An according cooperation may require a substantial amount of feedback data being transmitted, thus possibly significantly reducing network performance.

To reduce said feedback overhead, so-called cooperation areas (CA) may be defined. Cooperation areas may in particular be limiting the cooperation, thus the sharing of channel-dependent information of communication connections between mobile communication devices and network nodes, to a subgroup of adjacent cells.

Joint pre-coding (JP) may in particular require information about all relevant radio channels within a network, in particular the cooperation area, between all mobile communication devices and all network nodes of the network and of the cooperation area respectively.

In frequency division duplexing systems (FDD) joint pre-coding may be achieved by reporting channel-dependent information of the relevant, estimated radio channels between the mobile communication device and the network node with sufficient accuracy. E.g., when considering a cooperation area with 3, 5 or even 8 cells having one or two relevant antenna ports per cell, a single mobile communication device connected to one of the network nodes associated to that cooperation area may have to report channel-dependent information, e.g. channel state information, for up to 16 radio channels.

In particular, in orthogonal frequency division multiple access (OFDMA) systems, e.g. using the Long Term Evolution (LTE) frame structure, channel-dependent information may be required to be known with high frequency selectivity, e.g. for each physical resource block (PRB) of the LTE frame structure or even per half physical resource block.

When considering preferred, highly efficient joint pre-coding schemes, the following prerequisites may be especially beneficial.

The size of a cooperation area may be up to 3, 4 or even 5 network nodes for a future proof improved performance and simplified user grouping. User grouping may be seen as determining suitable mobile communication devices that may be associated to one another for a preferred transmission. Increasing the number of network nodes may thus allow for easier user grouping.

The signal-to-noise ratio (SiNR) when employing coordinated multipoint transmission may at least be substantially 20 dB. An according signal-to-noise ratio may allow employing 64QAM as a modulation and coding scheme. A further modulation and coding scheme may be QPSK and 16QAM.

A reduced signal-to-noise ratio may not substantially increase spectral efficiency for coordinated multipoint transmission with regard to 3GPP LTE Release 8. With 10 dB signal-to-noise, ratio spectral efficiency may be considered to be about 3.4 bits/s/Hz/cell versus a performance of 2.7 bits/s/Hz/cell for a 2x2 MIMO system according to 3GPP LTE Release 8.

When employing antenna tilting, increased areas with more than 20 db signal ratio (SiR) may be realized. Antenna tilting may localize interference, so that the strongest interferers are arranged in adjacent cells. without antenna tilting, also interferer with are situated significantly further away, which may not be cancelled out by cooperation. Thus, cooperation gains achievable may be reduced without antenna tilting.

E.g. in case of a signal-to-noise ratio of 20 dB, two streams of radio communication channels each having 17 dB signal ration (SiR) may result in 11.4 bits/s/Hz/cell, in particular having a median value of 10 bits/s/Hz/cell. In case, in a 20dB SiNR scenario, two streams are employed, transmission power is halfed, thus reduced by 3dB, arriving at 17dB.

Transparent pre-coding may allow for a fast switching between single cell transmission, single user coordinated multipoint transmission and multi-user coordinated multipoint transmission. Furthermore, partial cooperation for f-shifts and PDCCH mismatch may be beneficial. Partial cooperation may be seen as not all network nodes of a CA are cooperating with all mobile communication devices.

The amount of feedback data per mobile communication device may in particular be less than 200 bits/frame up to 400 bits/frame. Having a communication system with low delay may be beneficial. To arrive at an amount of feedback data per frame per mobile communication device of less than 200 to 400 bits/frame, a compression scheme for the channel-dependent information, in particular the channel state information feedback, may be employed.

Feedback compression may in particular consider gains like top-M reports, discrete cosines transform (DCT) and sub-space approaches. Top-M reports may be seen as a mobile communication device providing feedback only the top M numbers of physical resource blocks. A subspace approach may mean that long-term characteristics of a radio channel are provided seldom, e.g. only once at the beginning of a transmission, with short-term variations are transmitted relative to the long-term characteristics, i.e. the subspace.

For coordinated multipoint transmission, it may preferably be assumed that the movement velocity of the mobile communication device is quite low, e.g. below or up to about 3 km/h. This may allow for exploiting large correlation times for low reporting periods like e.g., one or two reports per frame, which would result in a time interval of 5 and 10 ms respectively.

In low velocity scenarios also a slow variation of the radio channel may be assumed. Thus, a full report of the respective channel-dependent information of all relevant communication connections between mobile communication devices and network nodes may be succeeded by a defined number of so-called tracking reports or delta reports. Tracking reports or delta reports take into account the information provided by the full report as well as possibly preceding delta reports between the current delta report and the last full report.

When only providing information on how the channel has changed compared to the last provided channel-dependent information, thus, a delta report, tracking reports may have a reduced size compared to a full report due to a possible reduction of data that has to be transmitted compared to a full report. However, when employing delta reports the following aspects have to be considered.

A first issue is that of error propagation. Error propagation may occur in the case a delta report has not been received by the recipient, e.g. the network node, due to an errorous transmission or reception. Thus, the delta report subsequently received after a lost report may provide information that is based on a false, e.g. outdated relative reference, due to an intermediate delta report being lost. In other words, the delta information provided by the lost delta report cannot be considered when employing the newly received delta report. Thus, an error may occur when considering the information of a delta report, which is not representing delta information based on the last received delta report but rather the last received delta report combined with the information of the lost delta report. This issue may in particular be relevant in case of large target block error rates (BLER) like e.g. 10% block error rates, thus leading to lost or inaccurate delta tracking after a failed delta report.

A further issue may be that of an overload condition. Overload conditions may occur if the channel variation rate is larger than expected, at least in short term. In case the channel variation rate is larger than expected, the amount of information that may be conveyed in a delta report may not be sufficient to accompany all data that would have to be included into the delta report to reflect the respective channel variation rate. In this particular case, the tracking report may not be able to follow the channel variation, thus may not be able to indicate an accordingly large variation. Furthermore, subsequent tracking reports may thus be errorous as well.

Accordingly, the size of the tracking report may vary depending on the degree of channel variation.

Consequently, a combination of a tracking solution, thus the utilization of delta reports in combination with a compression scheme like e.g. zip compression may allow very high compression ratios (CR) e.g. of up to 500%. The compression ratio may be calculated according to equation 1.

$$CR = \frac{1}{\left(ZIP_{ratio} \times \frac{N_{track}}{N_{full}}\right)} = \frac{1}{\left(0.3 \times \frac{4}{7}\right)} = 0.17 \qquad \text{Equation 1}$$

$ZIP_{ratio}$: Typical size of compressed tracking reports, e.g. 0.3
$N_{track}$: Number of bits of a tracking report, e.g. 4 bits
$N_{full}$: Number of bits for a full report, e.g. 7 bits

Lossless compression, in particular zip compression, may have the advantage of large compression ratios, in particular for tracking reports comprising repeating same or like information that has to be reported. The compression ratio may still be considered to be variable to a certain degree, possibly being unpredictable. Thus, variable compression ratios may change the size of feedback reports. Consequently, it may be difficult to define a correct or precise pre-allocation of resources, i.e. amount of reserved data space, for feedback reports. The receiver, e.g. the network node, may either have to estimate the size of the report or, on the other hand, a varying report size may have to be signaled explicitly.

In this regard, the present invention may provide a feedback scheme for coordinated multipoint transmission of channel-dependent information, in particular channel state information (CSI), more in particular joint pre-coding in single user multi-input multi-output (SU-MIMO) or multi-user multi-input multi-output (MU-MIMO) systems, which may be robust with regard to overload conditions, thus even providing adequate delta reporting in case of varying speed of channel variations and which may allow the utilization of a fixed reporting size, at least temporally, while employing a compression scheme having a variable compression ratio.

It is to be noted that when it is referred to a compression scheme in general, in particular a lossless compression or a zip compression scheme in particular, it may also be understood as Hoffman coding or detecting of repeating bit sequences with number of occurrence dependent coding.

In particular, when considering variable speed of channel variations, employing e.g. adaptive delta modulation may be beneficial. Adaptive delta modulation, employs e.g. a feedback of 1 bit, representing values of +/- 1. In case of more than one consecutive "+1" or "-1" value, it may be assumed that the predefined step size is too small. Thus, the sender as well as the receiver may increase the defined step size in a predefined manner known to both the sender and the receiver. The increase in step size may be repeated until an opposite value, "-1" or "+1", is fed back. While adaptive delta modulation may provide preferred tracking capability, errors in a data transmission may allow for the sender and the receiver, e.g. a mobile communication device and a network node, to get out of the sync, which may lead to the sender and the receiver using a different step size.

Also, with adaptive delta modulation, always either a value of "+1" or of "-1" has to be reported, even in the case that nothing may have changed from one tracking report to the subsequent tracking report.

When employing other compression schemes like e.g. zip compression, a series of "nothing changed" reports, possibly being indicated by a zero value "0", may thus lead to a possibly long sequence of zeros, which may be compressed with a high compression ratio.

The main principles of the feedback compression scheme according to the present invention may be compression with moderate performance loss, avoidance of irrelevance and minimizing redundancy. Quantization may be used as well, possibly leading to a pre-coding loss, which may be acceptable. E.g., when reporting channel state information, amplitude information may be quantized with 3 bits and phase information may be quantized with 4 bits.

In an according scenario, when employing coordinated multipoint transmission, a signal-to-noise ratio of 17 to 20 dB may be achievable for CDF values of 50%. The CDF characterizes a SiNR distribution, with CDF 50% may be seen as 50% of the relevant mobile communication devices achieving said SiNR. Frequency selectivity may be considered to be quite high, thus compression in the frequency direction may generate significant pre-coding losses. Employing one report per physical resource block may result in a performance loss of over 5 dB, when compared to reporting per half physical resource block. Each physical resource block comprises 12 sub-carriers, thus reporting per half resource block comprises one report per 6 sub-carriers.

Each mobile communication device within a coordinated multipoint transmission scenario may have a certain number of adjacently situated further mobile communication devices, possibly interfering with their respective communication transmission with the communication transmission of the mobile communication device. According adjacent mobile communication devices may be referred to as strongest interferers (sIF).

Different interferers regularly have different signal power. Thus, pre-coding errors for an interferer received with about 0 dB Rx power may degrade after CoMP SiNR to a higher degree than an interferer sending with e.g. -15 dB. In this case, the interferer having 0 dB may mask the interferer having -15 dB. Thus, it may be beneficial to not quantize both interferers with the same accuracy, thus number of data bits. Indeed, the -15 dB interferer may be reported with a substantially reduced number of bits than the 0 dB interferer. Reference signal received power (RSRP) measurements may allow to determine the required number of bits depending on the Rx power of the interferer.

Reduction of redundancy may in particular be important in the time domain. E.g. it may be beneficial to avoid that for slowly varying radio channels, identical or substantially similar information is transmitted several times, thus fed back to the mobile node. Additionally, when using lossless compression like e.g. zip compression, a further significant reduction of redundancy may be obtained, e.g. in the case a substantial amount of successive "no change" reports are fed back.

The following prerequisites may apply to a possible reporting scheme. Reporting for predicted radio channels may overcome outdating of channel state information. Channel outdating may occur in case of a delay between the determination of a precoding index of the radio channel and the time a signal employing an accordingly determined precoding index is transmitted. Since a radio channel may be varying over time, it may have changed to a degree, that the precoding may not match the channel conditions any more. Thus, performance may degrade.

A possible reporting scheme may provide two reports per frame, thus every 5 ms, predicting the respective radio channel for T+5 ms. For 3 to 5 cells being part of the cooperation area having one or two beams per cell altogether 3 to 10 channel-dependent information, e.g. channel state information values per mobile communication device may have to be reported. The quantization levels may be adapted to the relative mean power of radio channels, which may result in decreased overhead without performance loss, while increasing the likelihood of constant preferred matrix index (PMI) values being valid over a longer time, thus resulting in better tracking performance. The PMI may be seen as the preferred beamformer, with which the mobile communication device achieves highest SiNR. As an alternative, the quantization level may not be reduced, thus kept full however the same value may be reported for a longer time.

A possible reporting scheme may include the first report providing coarse quantization, the second or successive report may provide fine quantization with the third to n-th report providing tracking information. The scheme may be repeated starting again with the n+1 report. The quantization for a full report may be 3 bits for amplitude value and 4 bits for phase value. Reporting for n mobile communication devices per sub-band may provide sufficient multi-user scheduling flexibility and may allow scheduling per transmission time interval (TTI), however may depend on traffic characteristics like e.g. being optimal for few power users.

Here, a tracking codebook of 4 bits is proposed. Compared to a simple tracking solution with reports according to adaptive delta modulation, i.e. 1 bit tracking, the proposed codebook may allow for a larger tracking range and may provide one additional codebook entry for identifying a data overflow or overload condition. Per report for each physical resource block or for every six sub-carriers, i.e. for each half physical resource block, there may be one tracking entry.

Since amplitude variation may be considered to be slower, amplitude quantization comprises only "no change" ("0") or "+/- 1" quantization steps compared to the last value while for phase variation additional "+/-2" quantization steps may be included. Accordingly, the phase may vary to a higher degree than the amplitude without an overload situation occurring.

Overload conditions in case of mobile speeds of about 3 km/h and for a channel model in accordance with the spatial channel model extension (SCMe) may occur in only a few percent. Thus, the quantization of the codebook may be considered to be sufficient.

However, in case an overload condition occurs it may be identified by the codebook entry indicating data overflow. In case an overload condition is detected, conceivable measures may be as follows.

The overloaded resource may not be scheduled at all. This may be in particular due to a fast varying channel, thus a fast varying channel state information, may indicate errorous physical resource blocks.

Further, without generating additional overhead, the resource may be scheduled with performance degradation by employing automatic repeat request (ARQ) or hybrid automatic repeat request (HARQ). Using ARQ or HARQ schemes may comprise increasing the amount redundant data being sent in case of a transmission error for providing an error free demodulation or decoding of data.

Also, it may be conceivable to add a further delta report or even a full CSI report for or instead of the overloaded physical resource block at the beginning or end of the next tracking report. In case the next report is already a full report, the additional report may be omitted. Since an overload condition is considered to happen quite seldom, additional reports may generate only a minor additional overhead. Alternatively, the additional delta report may be added to the current report, which may provide the advantage that the network node comprises full CSI, thus report knowledge.

The additional delta reports may be defined with fixed lengths and may comprise a predefined order as well, i.e. first delta report for first overloaded physical resource block, second delta report for second overloaded physical resource block, etc. in order to minimize or avoid a further addressing overhead.

For limiting overhead, delta reports may be limited to e.g. three overloaded physical resource blocks. Also, a combination with adaptive delta modulation may be conceivable, e.g. in case one or several overloads occurring for a certain physical resource blocks or a plurality of physical resource blocks, step size, thus the quantization step, may be adapted accordingly for further reports, e.g. the quantization step size associated to the delta report or the codebook may be e.g. increased.

When considering a compression scheme like zip compression, a compression ratio between a full report of 7 bits per physical resource block and a tracking report with 4 bits per physical resource block may indicate only a moderate compression gain.

However, when combined with a compression scheme, the overall compression ratio may be increased significantly. Due to the occurrence of "no change" reports, which may e.g. be encoded as "0000", long sequences of zeros in the feedback report may occur. This may lead to a strong compression possibly resulting in an overall compression ratio of 500 to 800%.

Feedback reports may be prescheduled with a fixed length. However, variable compression ratio and different speed of channel variations may lead to a different overall container size of the reports. One possible solution may be to provide a relative large overall feedback container in which the "after compression data blocks" of variable length are mapped. The remainder of the container may just not be used. This may require preferred knowledge about possible after compression data lengths as otherwise the feedback container may have to be very large thus reversing the advantage of utilizing compression. Also, for highly compressed data lengths after the compression, the feedback capacity of the feedback container provided may not be exploited efficiently.

Thus, it may be beneficial to employ a fixed size feedback container, which may be inherently chosen to be too small for subsequent filling of that feedback container with as much information as possible, i.e. with as much information that may be fitted into the feedback container.

The basic size of the feedback container may be adapted in particular to long-term conditions. E.g., for mobile communication devices arranged at an edge or a border of a communication cell, a small container size may be sufficient while for mobile communication devices arranged near the center of the communication cell having very good radio channel conditions, a large container may be defined.

An according container size may be set semi-statically by the network node. In an arrangement having a larger amount of strongest interferers, thus requiring an increased report size, the network node may set the container size to reflect the occurrence of multiple strongest interferers. This may e.g. be in the center or near the center of the communication cell.

The strongest and possibly the most interferers may occur at cell edges, since the signal between a mobile communication device and a network node may be weakest with interfering signals being in particular strong. Contrary hereto, in the center of a wireless cell, the pathloss of the radio channel may be reduced, thus the data rate of a mobile communication device may be higher to a degree that cell center mobile communication devices may provide increased feedback versus cell edge mobile communication devices. Moreover, after CoMP SiNR of cell edge mobile communication devices may be reduced due to the possible increase in interferers. Thus, the feedback provided by a cell edge mobile communication device may not necessarily be as accurate as that of a cell center mobile communication device, since small precoding errors may be covered by the remaining interferers.

The container may be filled with most important information first, e.g. accurate channel state information requiring a large reporting size for strongest channel component, and subsequently filling the container with increasingly less important information, e.g. information about channel components, e.g. mobile communication devices contributing to after coordinated multipoint transmission signal-to-noise ratio to a lesser degree. Information is included into the container until it is completely or at least almost filled or until no further information has to be included, e.g. due to the absence of further channel components. Thus, information about the lowest relevant component may be added as the last info into the feedback container.

The order of information within the container may also utilize a quality of service (QoS) queuing scheme. E.g., a component that was not reported for a prolonged of the longest time in previous reports gets higher or highest priority for inclusion into the container.

Channel-dependent information or channel state information may also be reduced when a container overflow may be imminent by reducing frequency granularity, which in turn will result in a reduced pre-coding performance as well. Radio channels may be frequency selective, thus channels are varying in particular frequency dependently. Thus, it may be most beneficial for a precoder being determined independently for each frequency. However, for reducing overhead, only every n-th frequency may be fed back per channel, due to which precoding errors may occur. With increasing n, thus reduced frequency granularity, performance may be reduced.

Also, the number of overall reported channel components may be adapted to the container size. E.g., channel components, mobile communication devices or strongest interferers with lowest power and thus the smallest contribution to pre-coding performance may be skipped completely in case of overflow. The uncompressed codebook entries may be adapted in case of low power components as well, so that the compression ratio may be increased with high likelihood.

Linear prediction, i.e. prediction or reporting in evenly spaced time intervals, may be preferred in low mobility scenarios. However, this may allow to increase prediction time by a factor of 2, 3 or even more, thus allowing the reporting of low power channel components only every second, third or n-th tracking report. Consequently, the prediction accuracy decreases with increasing prediction time horizon while the reporting overhead is reduced in accordance with the reduction of reporting accuracy, thus channel state information accuracy.

Also, the compression scheme having a certain compression ratio, which may not be fully predictable, may be adapted to the currently occurring data requirement that has to be fitted inside the feedback container. Thus, a first compression may be performed, subsequently resulting in a certain amount of data after the compression. In case the after compression data amount may not be fitted into the feedback container, the compression scheme may be adapted, in particular with regard to the uncompressed data, in a successive compression, possibly resulting in a further reduced after compression data amount.

Employing zip compression may in particular comprise the following aspects. The overall achievable compression ratio, thus the amount of data after the compression, may vary in accordance with the compression ratio of the compression scheme. The container size for a feedback container, thus the container size for reports, may have to be fixed, the containers thus filled as far as possible with the most insignificant information being possibly skipped in case the container size is insufficient to contain all information provided. Less relevant or most insignificant information may in particular be low power channel components, thus having low power channel state information, which in turn may be skipped partly or completely. Not currently scheduled physical resource blocks may be skipped as well. Furthermore, a switch to a lower quantization level may be performed.

This may result in moderately varying the pre-coding performance, which may in turn provide most preferred usage of available resources. However, fast changes of radio channels may lead to a reduced compression ratio. In this case, compression performance is reduced as well. An optimal processing may comprise the steps of compressing the report in a predefined manner, subsequently detect underflow or overflow of the reporting container, which may lead to an extension or may require a further reduction of the reporting size. This may result in several subsequent compression attempts until a suitable compression ratio is obtained. However, a compression scheme achieving an optimal result in the first path may be most beneficial.

Tracking reporting may in particular provide the following benefits.

By employing tracking reports instead of full reports the number of reporting bits may be reduced for an optimal exploitation of time correlation. With a tracking codebook comprising 4 bits or more generally x bits instead of one tracking bit per amplitude and phase value or real and imaginary part, as with adaptive delta modulation, a larger tracking range for phase values of {-2, -1, 0, 1, 2} compared to single bit tracking having only two values {-1, +1} is achievable. Furthermore, overflow detection may be achievable, in case the tracking range may be not sufficient.

Lossless compression, e.g. zip compression of relevant information, may allow for a further reduction of the number of bits required for tracking values. The adaptation of reporting overhead to a channel component's relative power may avoid irrelevant feedback included in the feedback report. This may be achieved by a reporting employing a reduced reporting period, a coarser frequency resolution, a larger prediction time and/or larger quantization steps of channel components with reduced relative power when compared to the relevant mobile communication device.

The feedback accuracy per channel component may be adjusted to the compression ratio of the currently used compression scheme. Fixed size feedback containers may thus be employed allowing complete use of available resources. Increased feedback may improve pre-coding, at least temporarily, and may result in a lower number of HARQ retransmissions.

Partially self-contained feedback may be added per report, which may allow for high block error rates targets of e.g. 10% for avoiding further overhead for strong channel coding.

The present invention may be seen as exploiting inherent correlation gains due to assuming low mobility, low velocity of about 3 km/h when reporting channel state information.

A robust tracking solution with high compression ratios of 500 to 800% as compared to fully uncompressed reports may be obtainable, thus resulting in high performance joint pre-coding coordinated multipoint transmission schemes. Feedback for low mobility may be equivalent to full reports of size 3/4 bits for phase/amplitude values, resulting in about 17 dB after CoMP SiR at 50% CDF.

A combination of 4 bit tracking codebooks with a compression scheme may provide a lower overhead as compared to 1 bit tracking (codebook + compression may effectively result in about 1.2 bits per channel component as compared to 2 bits per channel component for 1 bit tracking).

Fixed size feedback containers may allow for easy implementation in standardized communication scenarios.

The overall feedback capacity may be increased for providing increased channel state information transfer capacity from the mobile communication device to the network node, allowing for preferred pre-coding performance for a given uplink capacity.

When employing compression schemes like zip compression, the processing overhead may be considered to not constitute a dedicated complex mechanism. Frequency correlation may inherently be exploited by channel interpolation gains for flat radio channels. Also frequency selective channels, e.g. at cell edges, may be supported.

The reporting scheme may be considered to be near an optimal usage of a feedback link for channel state information reporting due to its inherently adapting joint pre-coding behavior like reduced sensitivity of amplitude errors and adaptation of overhead depending on relative Rx power of channel components, further exploiting correlation in time direction by tracking reports and employing lossless compression. A further increase in efficiency may be achieved e.g. by model based channel state information prediction.

A gist of the invention may be the adaptation of the accuracy of channel dependent information being provided by reports, e.g. the number of channel components and/or the accuracy of CSI being sent over a fixed size feedback container, possibly including as much data as possible within the fixed size of the container. Such a feedback container may be referred to as a logical data unit of a transmission.

In the following, further embodiments of the present invention are described referring in particular to a mobile communication device as well as a network node.

However, arbitrary variations and interchanges of single or multiple features between the claimed entities is conceivable and within the scope and disclosure of the present patent application.

According to an exemplary embodiment of the present invention, the compression scheme may be at least one scheme out of the group consisting of zip compression, Hoffman coding and detection of repeating bit sequences.

An according to compression scheme may allow for a preferred compression in case of similar or identical bit sequences being repeated, in particular in a "no change" scenario.

According to a further exemplary embodiment of the present invention, the information of a channel-dependent attribute may be adapted to comprise at least one out of the group consisting of channel state information, channel state information of the communication channel and channel state information of at least one further mobile communication device arranged such that the further mobile communication device may influence the transmission of the mobile communication device.

In particular by incorporating not only channel-dependent information or channel state information of its own communication channel between a mobile communication device and a network node but also channel state information relating to further mobile communication devices arranged in the vicinity of the mobile communication device, a preferred adaptation of the communication channel with respect to further communication channels may be conceivable, possibly reducing interfering with the communication channel.

According to a further exemplary embodiment of the present invention, the channel-dependent attribute may be one out of the group consisting of absolute information, relative information, tracking information and delta information.

Full information may be understood as information or a report comprising a precise, full set of parameters to define channel state information, e.g. pre-coding of a certain communication channel, while tracking information or delta information may only indicate a relative change of information, in particular compared to the preceding information or report. Tracking information may in particular be a difference between a full report and a subsequent difference report, while a delta report may indicate the difference between two received tracking reports/tracking information.

According to a further exemplary embodiment of the present invention, the channel dependent information may comprise one of a defined size and a fixed size.

In particular a fixed size may be beneficial so that an additional indication of the size of the channel state information may be avoided. Also semi-static size of channel state information may be conceivable, i.e. the size of the channel state information is dependent on and being set according to prevailing communication preconditions, e.g. like the number of currently active channel components and their respective Rx power.

According to a further exemplary embodiment of the present invention, an overflow condition of the channel dependent information may be signaled by the channel dependent information.

In other words, in case the range for signaling, e.g. delta information of the channel state information, is insufficient to actually and precisely provide sufficient data for the required delta information, the channel state information may be adapted to comprise data or a known bit sequence indicating that the information of the channel state information is indeed not valid as more information would have been necessary to be conveyed than data capacity was available.

According to a further exemplary embodiment of the present invention, the compressed information may comprise a defined size per half physical resource block.

Providing overall channel state information per half physical resource block may further enhance the accuracy of joint pre-coding, thus further minimizing interference between individual channel components.

According to a further exemplary embodiment of the present invention, the defined size of the compressed information per physical resource block will per half physical resource block may not exceed one of 400 bits per frame and 200 bits per frame.

An according amount of data may provide for adequate signaling of channel state information for coordinated multipoint transmission in a joint pre-coding solution while minimizing necessary data overhead.

According to a further exemplary embodiment of the present invention, the frequency granularity of the relative information may be adjusted.

In case a feedback or precoder is relating not to a single frequency, but e.g. only every n-th frequency, by adjusting n, the frequency granularity of the report may be adjusted.

According to a further exemplary embodiment of the present invention, the relative information is adapted to employ a tracking codebook.

For the relative information, a codebook may be used with an increased length of the codes, e.g. 4 bits instead of 2 bits for 1bit-tracking, having 1 bit for amplitude and 1 bit for phase tracking. This increase in reporting size may allow including e.g. overflow detection and an increased phase tracking range. Due to a possible additional lossless compression, this increased overhead is effectively reduced, while overflow detection and increased phase tracking range is still included.

According to a further exemplary embodiment of the present invention, the network node may be couplable with a communication system wherein the network node may be adapted to signal the received information of to at least one further network node of the communication system.

With a network node being able to signal received channel-dependent information to further network nodes, all network nodes, e.g. belonging to a cooperation area, may receive the channel state information acquired by a mobile communication device connected to the network node.

According to a further exemplary embodiment of the present invention, a mobile communication device is provided, comprising a sending and receiving unit and a processing unit. The sending and receiving unit is adapted for the transmission of a signal pattern over a communication channel. The transmission may comprise a frame structure having at least one physical resource block, wherein the signal pattern comprises information of a channel-dependent attribute. The processing unit is adapted for compressing the information prior to transmission using a compression scheme. The compressed information comprises a defined size per physical resource block.

According to a further exemplary embodiment of the present invention, a network node is provided, comprising a sending and receiving unit, wherein the sending and receiving unit is adapted for the transmission of a signal pattern over a communication channel. The transmission may comprise a frame structure having at least one physical resource block with the signal pattern comprising compressed information of a channel-dependent attribute. The compressed information comprises a defined size per physical resource block with the network node being adapted to receive the signal pattern comprising the compressed information of a channel-dependent attribute from a mobile communication device.

According to a further exemplary embodiment of the present invention, a communication system is provided, comprising a mobile communication device according to the present invention and a network node according to the present invention. The mobile communication device and the network node are operatively coupled for the transmission of a signal pattern and the mobile communication device is adapted to transmit compressed information comprising information of a channel-dependent attribute consisting of channel state information of the communication channel between the mobile communication device and the network node.

According to a further exemplary embodiment of the present invention, a method for signaling channel-dependent information is provided, comprising determining, by a determination unit, a channel-dependent attribute of a transmission between a mobile communication device and a network node, wherein the transmission may comprise a frame structure having at least one physical resource block. Subsequently, a processing unit, using a compression scheme, is generating compressed information comprising the channel-dependent attribute prior to transmission. A sending and receiving unit is transmitting the compressed information, wherein the compressed information comprises a defined size per physical resource block.

According to a further exemplary embodiment of the present invention, a method for receiving channel-dependent information is provided, comprising receiving by a sending and receiving unit a transmission, possibly having a frame structure comprising at least one physical resource block, wherein the at least one physical resource block comprises compressed information having a defined size per physical resource block, the compressed information comprising a channel-dependent attribute of the transmission.

It is to be noted that embodiments of the present invention and aspects of the invention have been described with respect to different subject-matters. In particular, some embodiments have been described with reference to apparatus type claims whereas other embodiments have been described with reference to method type claims. However, a person skilled in the art will gather from the above and the following description that, unless notified otherwise, in addition to any combination features belonging to one type of subject-matter also any combination between features relating to different subject-matters, in particular between features from the apparatus claims and the features of the method claims is considered to be disclosed within this application.

These and other aspects of the present invention will become apparent from and elucidated with reference to the embodiments described hereinafter.

Exemplary embodiments of the present invention will be described in the following with reference to the following drawings.

The illustration in the drawings is schematic. In different drawings, similar or identical elements are provided with the same reference numerals.

Brief description of the drawings

Fig. 1a, B show exemplary embodiments of a mobile communication device and a network node according to the present invention;

Fig. 2 shows an exemplary embodiment of a communication network comprising three network nodes and two mobile communication devices according to the present invention,

Fig. 3 shows an exemplary concept of signal processing in a cooperation area according to the present invention;

Fig. 4 shows an exemplary embodiment of after coordinated multipoint transmission signal-to-noise ratio for reporting per physical resource block and per half physical resource block according to the present invention;

Fig. 5A-C show exemplary embodiments of tracking information and an exemplary embodiment for a tracking codebook according to the present invention;

Fig. 6 shows an exemplary embodiment of a quantization table dependent on Rx power of a channel component according to the present invention;

Fig. 7 shows an exemplary embodiment of a reporting scheme using tracking reports according to the present invention;

Fig. 8 shows exemplary estimation of uplink feedback rates for different reporting schemes according to the present invention;

Fig. 9 shows an exemplary embodiment for report generation according to the present invention;

Fig. 10A-C shows an exemplary comparison between 1 bit tracking versus codebook tracking including lossless compression according to the present invention;

Figs. 11a, b show exemplary embodiments of a method for signaling channel-dependent information as well as a method for receiving channel-dependent information according to the present invention.

Detailed description of embodiments

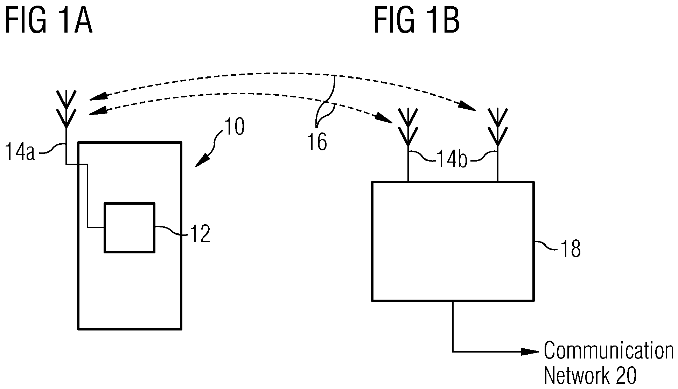

Now referring to Fig. 1A,B, exemplary embodiments of a mobile communication device and a network node according to the present invention are depicted.

Fig. 1A shows a mobile communication device 10 comprising a processing unit 12 and a sending and receiving unit 14a. The mobile communication device 10 may e.g. be a mobile phone, a PDA, a portable computer or the like. The mobile communication device may further comprise a display, a keyboard, a speaker and a microphone, all of which is not depicted in Fig. 1A. The processing unit is coupled with the sending and receiving unit 14a.

Fig. 1B shows a network node, e.g. a cellular base station of a communication network 20, here exemplary comprising two sending and receiving units 14b. The network node 18 is communicatively coupled over communication connections 16 from both sending and receiving units 14b to sending and receiving unit 14a of the mobile communication device. Both communication connections 16 between sending and receiving unit 14a and sending and receiving units 14b may comprise an individual channel-dependent attribute, e.g. distinct channel state information.

The mobile communication unit 10 may thus communicate over the wireless communication link 16 with the communication network 20.

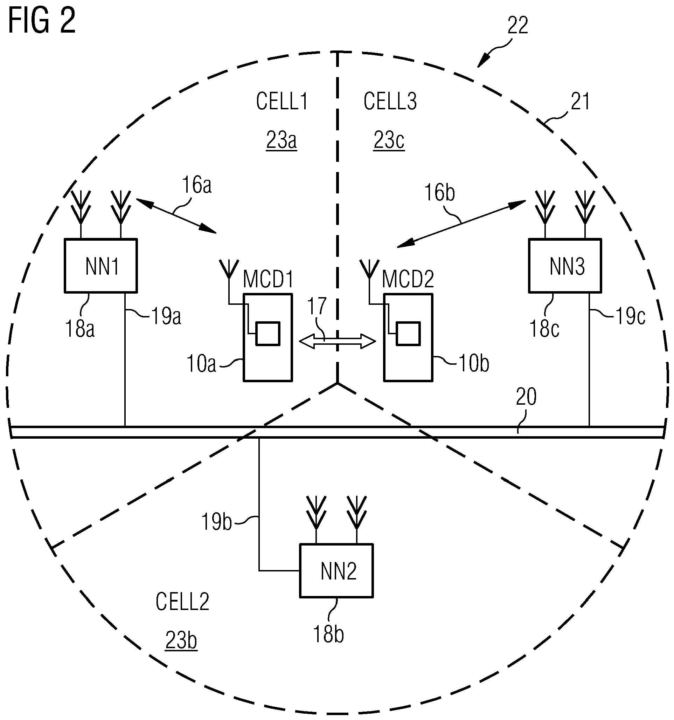

Now referring to Fig. 2, an exemplary embodiment of a communication system comprising three network nodes and two mobile communication devices according to the present invention is depicted.

In Fig. 2, a communication system 22 comprising a cooperation area 21 is depicted. Cooperation area 21 exemplary comprises three network nodes 18a,b,c, which are connected over links 19a,b,c to the communication network 20, e.g. the backbone of the communication network 20. Within the cooperation area 21, two mobile communication devices 10a,b are arranged. Each network node 18a,b,c has a communication cell 23a,b,c associated to it. Mobile communication device 1 10a is arranged within communication cell 1 23a and mobile communication device 2 10b is arranged within cell 3 23c.

Mobile communication device 1 10a is associated with network node 18a over link 16a. Mobile communication device 2 10b is associated with network node 3 18c over communication link 16b. Due to the adjacent arrangement of mobile communication device 1 10a and mobile communication device 2 10b adjacent to one another possible interference 17 may occur.

Each mobile communication devices 10a,b may provide relevant channel-dependent information, e.g. channel state information, to the network node 18a,c it is associated with. Thus, e.g. mobile communication device 1 10a may signal to network node 1 18a over communication link 16a, channel state information of itself and its respective communication connection 16a. The same is performed by mobile communication device 2 with respect to mobile communication connection 16b.

Since all network nodes 1,2,3 18a,b,c are associated with the cooperation area 21, the network nodes 1,2,3 18a,b,c may exchange received channel state information over the communication network 20 to one another employing respective communication links 19a,b,c.

Since all network nodes 1,2,3 18a,b,c are aware of the two relevant channel dependent attributes of mobile communication device 1 and 2 10a,b, at least network nodes 1 and 3 18a,c may employ this information for its own respective communication connection 16a,b to arrive at a communication connection with at least reduced interference 17.

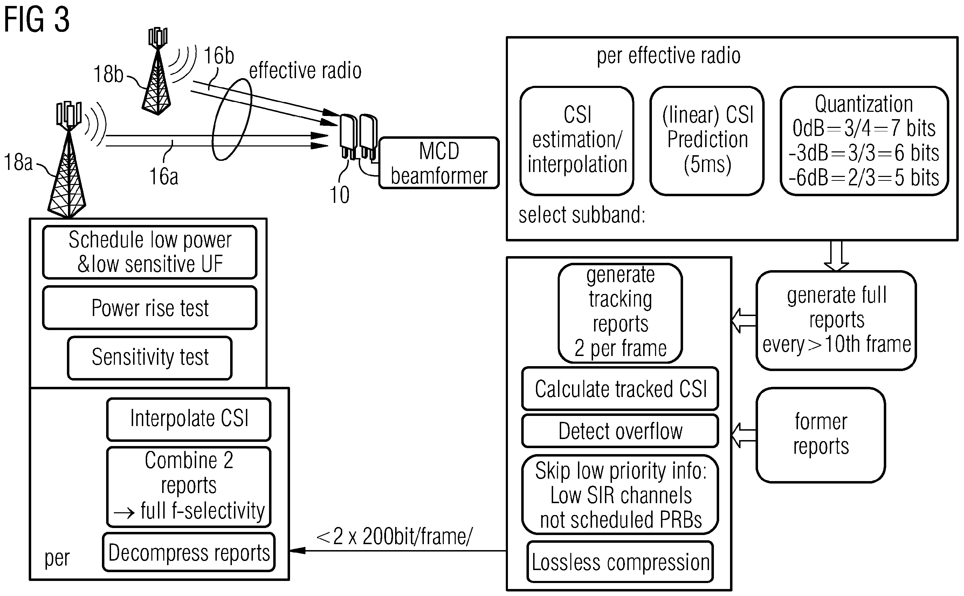

Now referring to Fig. 3, an exemplary concept of signal processing in a cooperation area according to the present invention is depicted.

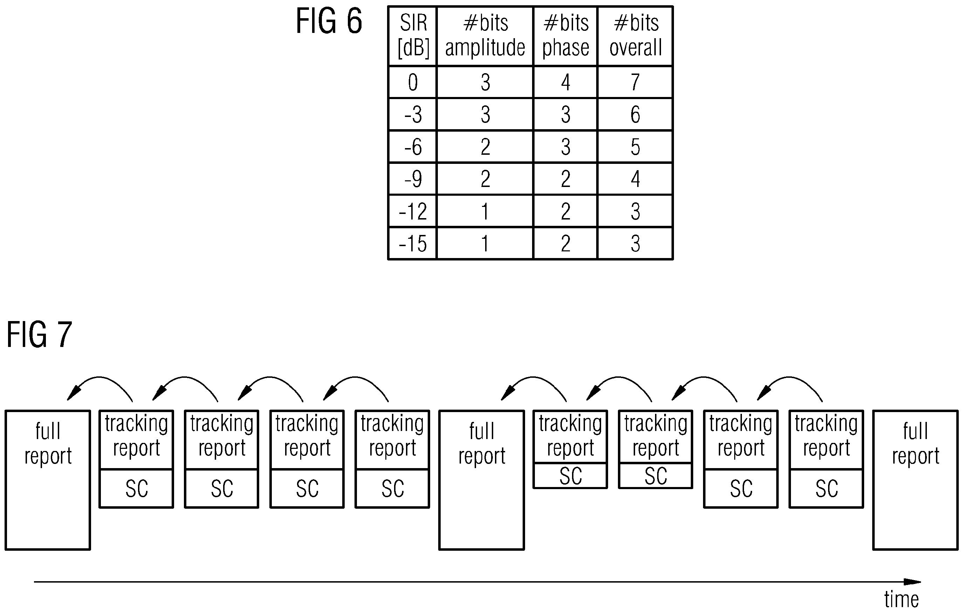

In Fig. 3, a mobile communication device 10 is connected to two network nodes 18a,b over communication connections 16a, 16b each comprising two communication links. Beam forming may be employed for the communication of the mobile communication device 10. Subsequently, per effective radio channel, a channel state information estimation or interpolation is performed. Every 5 ms, linear channel state information prediction is performed, possibly employing a quantization in accordance with relative power of channel components. Having a SiR of 0dB will result in a quantization using 7 bits, with a SiR of -3dB 6 bits may be employed while with a SiR of -6dB 5 bits may be employed (cf. also with Fig. 6).

A full report is thus generated every 10th frame or even less often with an additional two tracking reports or delta reports per frame being generated in between two full reports. Thus, tracked channel state information is calculated from the tracking reports. In case an overflow situation is detected, former reports may be employed for solving the overload condition, e.g. by providing at least one intermediate, thus additional tracking report or even a supplementary full report.

All tracking report information, at least all relevant tracking report information, has to be included into the feedback container. In case the container does not provide sufficient storage capacity low priority information like low SiR channels or physical resource blocks that are not scheduled are skipped. Subsequently the information is encoded using a lossless encoding scheme, e.g. zip encoding, for obtaining a complete feedback container.

The feedback container is forwarded two times per frame, e.g. per half frame, each time having less than 200 bits, to the mobile node, here exemplary mobile node 18a. The reports are subsequently decompressed by the mobile node 18 with two reports being combined for full frequency selectivity. Full frequency selectivity may be understood as providing two values per physical resource block. In case feedback is provided twice per PRB, preferably by employing frequency shifted subcarriers, interpolation of time and frequency is achievable.

The channel state information is then interpolated from the full reports as well as the tracking reports. Tests like sensitivity tests and power rise tests may be performed on the network node side and subsequently channel state information is employed for scheduling a communication between the network node 18 and the mobile communication device 10, e.g. by scheduling a low power and low sensitive communication via the mobile communication device 10.

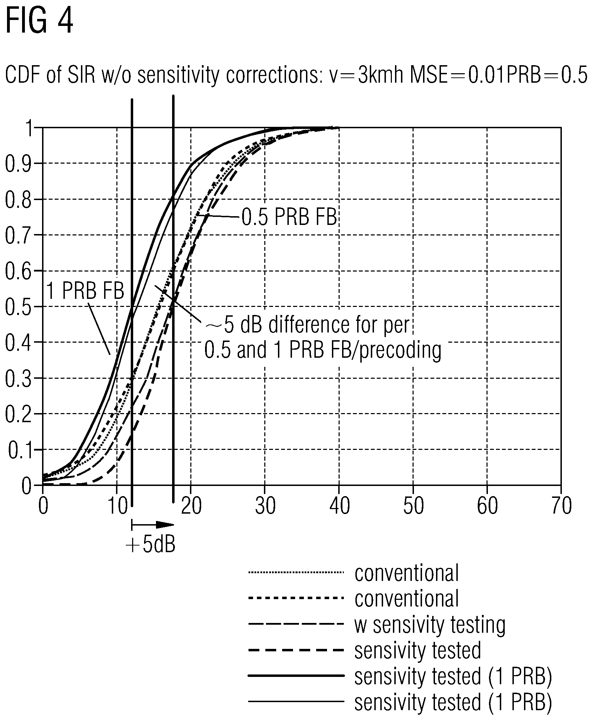

Now referring to Fig. 4, an exemplary embodiment of after coordinated multipoint transmission signal ratio (after CoMP SiR) for reporting per physical resource block and per half physical resource block according to the present invention is depicted.

In Fig. 4, a different SiR or a gain in SiR comparing one feedback container per physical resource block versus one feedback container per half physical resource block is depicted. As may be taken from Fig. 4, by doubling the feedback, thus providing an according feedback every half physical resource block, may increase SiR by about 5 dB. Thus, by influencing frequency granularity, feedback overhead may be adapted.

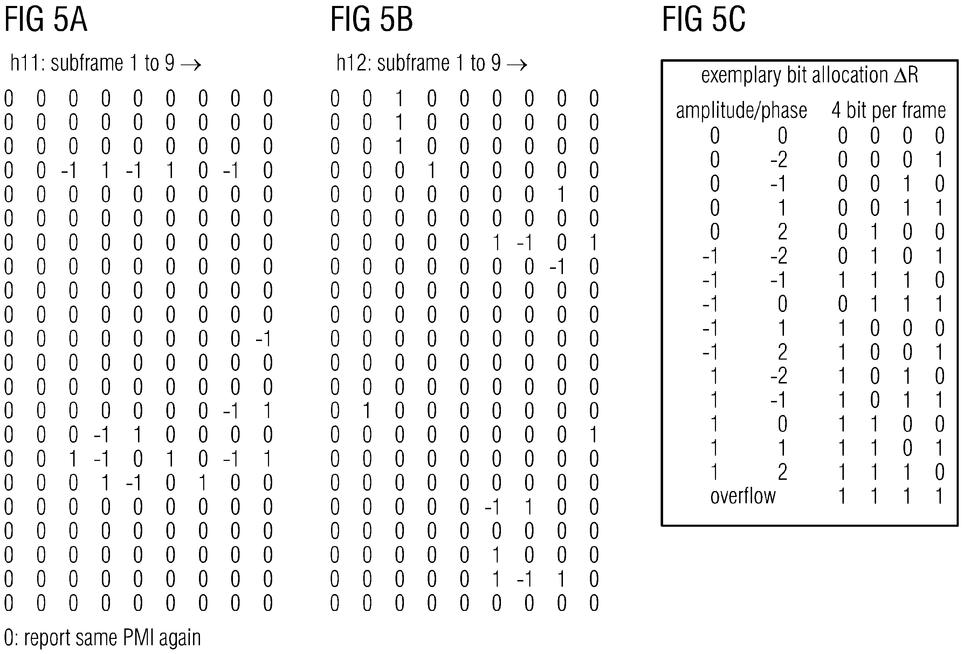

Now referring to Figs. 5A-C, exemplary embodiments of tracking information and an exemplary embodiment for a tracking codebook according to the present invention are depicted.

In Figs. 5A,B exemplary delta reports per sub-frame for a mobile communication device are depicted. A value of "0" again reports the same preferred matrix index, e.g. for codebook-based precoding. Thus, "0" may be interpreted as the channel state information (phase or amplitude) value remaining unchanged, while "+/-1" may be interpreted as the channel state information has changed by one quantization step up or down. Due to low mobility (mobile speed of 3 km/h or less) the values remain substantially unchanged to a large degree. According tracking reports are well suited for further compression. Fig. 5A,B depict delta reporting for e.g. a single LTE frame with ten 1ms subframes and for 20 physical resource blocks. In this example, having 10 subframes requires nine delta reports to report changes between two successive frames.

Fig. 5C shows an exemplary embodiment of a codebook employing 4 bits per frame. Amplitude quantization remains "0" and "+/-1" while phase quantization is enhanced by also providing "+/-2" values. Also in case all 4 bits are 1, thus a bit sequence of "1111", an overflow situation may be indicated. In this case, quantization step size of either amplitude or phase may not be sufficiently large to allow indicating the precise change of channel state information.

Now referring to Fig. 6, an exemplary embodiment of a quantization table dependent on Rx power of a channel component, in particular a strongest interferer, according to the present invention is depicted.

The number of bits per channel component may be adapted to the wide band power with which the respective component is received. In Fig. 6, an exemplary quantization table depending on SIR of a respective channel component with respect to a communication connection of a dedicated mobile communication device is depicted.

The quantization table depicts the bit reduction feasible with respect to a fully quantized report or full report. E.g. when having an interferer with a SiR of -9dB, only 2 bits each for amplitude and phase may be employed, thus resulting in only 4 bits for the respective report. Other SiR-values allow for different reductions.

Different options may be seen how to apply the reduced number of quantization bits into reduced overhead for a tracking report. Changing only the quantization may result in a larger step size of same quantization levels, which will thus be reported for a longer time interval. In other words, having larger step sizes, the "no change" value will be reported more often leading to higher overall compression ratios. In this particular case the adaptation may be considered to be achieved inherently. Also codebook size may be reduced for lower power components.

Reporting of low power components might be provided over different reports either by fragmentation of the reports or by reporting only every $n^{th}$ tracking report. This may be a result, at least in part, on the increased time intervals over which coarser quantization steps will report the same value. Also one average for two or more subsequent reports may be sent. Since often delta values are toggling about an average value, in particular back and forth over the average value, reports may be very efficient.

Now referring to Fig. 7, an exemplary reporting scheme for tracking employing delta reports is depicted.

In Fig. 7, exemplary every $5^{th}$ report is a full report with 4 intermediate tracking reports, each tracking report referring to and requiring the preceding report, as indicated by the arrows of Fig. 7. The tracking reports may be self-contained, which may be beneficial for a robust transmission. The reporting size of the tracking report following a full report may be reduced, as statistically less information may be required.

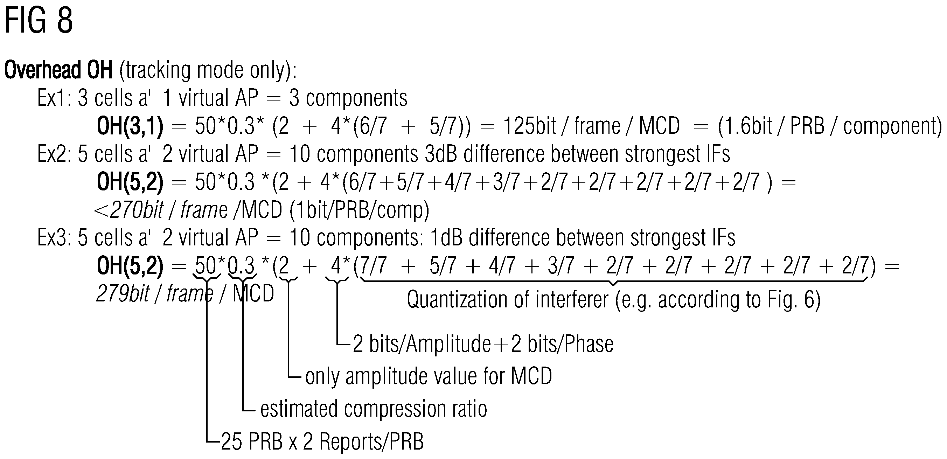

Now referring to Fig. 8, exemplary estimation of uplink feedback rates for different reporting schemes according to the present invention is depicted.

Fig. 8 depicts the overhead required for reporting, e.g. the size of a reporting container, in different scenarios. A signal-to-noise ratio of 15-20 dB is assumed with a frequency resolution, thus a reporting interval, of a half physical resource block. An LTE communication employing 5 MHz subbands, having 25 physical resource blocks, is assumed. Quantization is 3 bits for amplitude and 4 bits for phase for a full report. Strongest interferers are assumed having a 3 dB power gap. The phase of the first component may be fixed, lossless zip compression may be applied with a movement velocity of 3 km/h. For the tracking reports a quantization table in accordance with Fig. 6 may be employed.

In all examples, the number "50" results from 25 physical resource blocks with two reports per PRB. For all overhead calculations, a compression ratio of "0.3" is assumed. The value "2" reflects that phase is reported relative to the phase of the first channel component or mobile communication device, thus only 2 bits are employed for amplitude value. For each further channel component, e.g. interferer, 4 bits with 2bits/amplitude and 2bits/phase are employed, thus factor 4. Each further channel component or interferer may be quantized according to their respective Rx power, e.g. in accordance with the quantization table of Fig. 6.

In example no. 1, three cells having one virtual access point are assumed, constituting three channel components. With three components, one component is considered to be the relevant mobile communication device while the other two are considered to constitute interferers. The strongest interferer is considered to have a signal ratio of -3 dB while the second strongest interferer is assumed to have -6 dB (thus a quantization using 6/7 and 5/7 bits).

An according calculation results in about 125 bits per frame per mobile communication device, taking into account 25 physical resource blocks with two reports per physical resource block (or rather one report per half physical resource block). Thus 1.6 bits per physical resource block and component are required for adequate feedback information.

The second example assumes five cells having two virtual access points, thus comprising 10 components altogether with the strongest interferer having a signal ratio of -3 dB. An according calculation results in 270 bits per frame per mobile communication device, thus 1 bit per physical resource block per component.

Example 3 is substantially similar to example 2 with the main difference being that the strongest interferer now having a signal ratio of -1 dB.

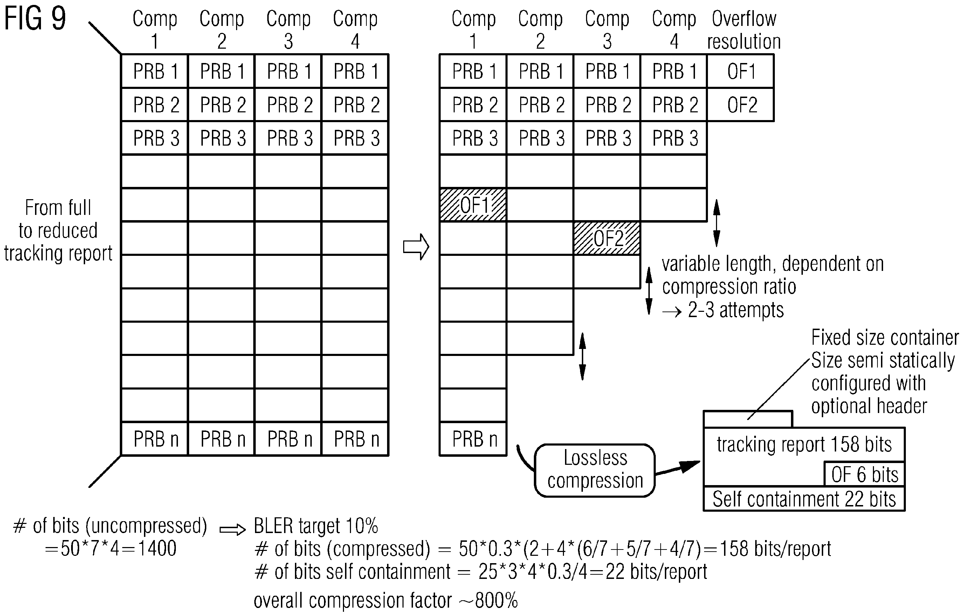

Now referring to Fig. 9, an exemplary embodiment of report generation according to the present invention is depicted.

Fig. 9 illustrates an exemplary compression procedure from full reports for four components with 7 bits per half physical resource block. By employing irrelevance reduction and lossless compression, a compression ratio of about 800% may be achievable. This may also include overflow handling and in particular resources for partial self containment, allowing for robust tracking schemes even in case of block rate error targets of 10%.

All reports are assumed to be semi-statically configured for regular reports over the physical uplink shared channel (PUSCH) .

Since typical lossless compression ratios, e.g. zip compression, may be very stable, overflow conditions should occur only sparsely when considering fixed size feedback containers.

After every n<sup>th</sup> report a "continue" or a "stop" bit may indicate to individual or several mobile communication devices whether they may continue with reporting of channel state information.

Tracking may be performed in frequency direction as well as in time direction. However, in outdoor scenarios, frequency selectivity may be considered to be too high to provide a significant gain. In addition, frequency correlation gains may also be exploited inherently by channel interpolation at the network node.

Reduction on length of the individual colums of the right part of Fig. 9 results from more coarse quantization or diminished frequency granularity for interferers with reduced Rx power. To subsequently fill the feedback container with as much information as possible, the quantization of the interferer may be adapted to the current lossless compression ratio. Thus, with increased compression ratio, quantization accuracy may be increased, while with a low compression ration quantization accuracy may be decreased.

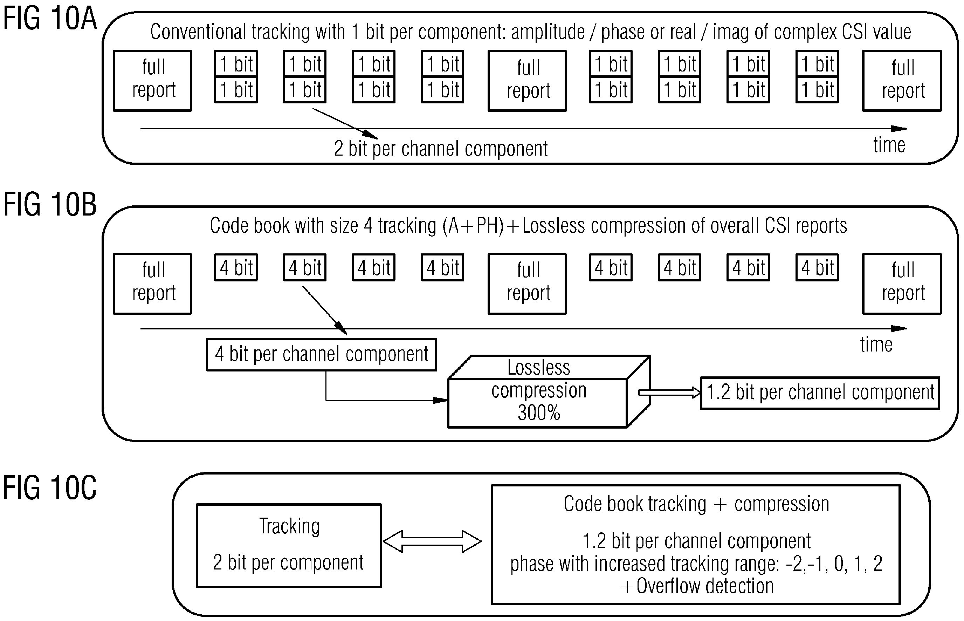

Now referring to Figs. 10A-C, an exemplary comparison between 1 bit tracking versus codebook tracking including lossless compression is depicted.

In Fig. 10A, a conventional tracking with 1 bit per component or amplitude/phase or real/imaginary part of a complex channel state information value is depicted. Again, exemplary, a full report is followed by 4 tracking reports. Each tracking report comprises 2 bits per channel component in case of conventional 1 bit tracking for amplitude/phase or real/imaginary part of the CSI.

Now referring to Fig. 10B, codebook tracking comprising a codebook size of 4 bits for amplitude and phase plus lossless compression of overall channel state information reports is depicted. Again one full report is followed by 4 tracking reports. Each tracking report comprises exemplary 4 bits, which may subsequently be compressed by a lossless compression scheme to 1.2 bits per channel, assuming a compression ratio of about 300%. Thus, a significant reduction of reporting capacity required is achieved while at the same time the tracking range for the phase component is increased by now having values {-2; +2} as well as additional overflow detection.

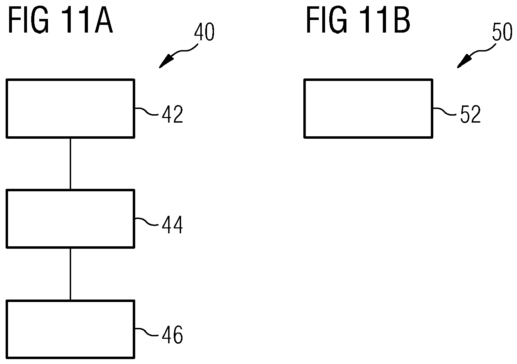

Now referring to Figs. 11A,B, exemplary embodiments of a method for signaling channel-dependent information as well as a method for receiving channel-dependent information according to the present invention is depicted.

Fig. 11A shows the method for signaling channel-dependent information 40 comprising determining 42, by a determination unit, information for a transmission between a mobile communication device 10 and a network node 18; wherein the transmission comprises a logical data unit having a defined size. Subsequently, compressed information is generated 44, by a processing unit using a compression scheme, the compressed information comprising the information and further the logical data unit containing the compressed information is transmitted 46 by a sending and receiving unit 14.

Now referring to Fig. 11B, a method 50 for receiving channel-dependent information is depicted.

The method 50 comprises receiving 52, by a sending and receiving unit 14, a transmission comprising a logical data unit of defined size containing compressed information.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Reference numerals

10        Mobile communication device
12        Processing unit
14a,b     Sending and receiving unit
16a,b,c   Communication connection
17        Interference
18a,b,c   Network node/base station/eNB
19a,b,c   Link to communication network
20        Communication network
21        Cooperation area
22        Communication system
23a,b,c   Cell

40        Method for signaling channel-dependent information
42        STEP: Determining information
44        STEP: Generating compressed information
46        STEP: Transmitting compressed information

50    Method for receiving channel-dependent information
52    STEP: Receiving compressed information


**Claims**

1.  Mobile communication device(10) for use in a system employing coordinated multipoint transmission, comprising

    a sending and receiving unit (14); and
    a processing unit (12);

    wherein the sending and receiving unit (14) is adapted for the transmission of a signal pattern over a communication channel (16);
    wherein the signal pattern comprises a logical data unit having a predetermined size adapted to long-term channel characteristics of the mobile communication device (10);
    wherein the processing unit (12) is adapted for compressing channel state information prior to transmission using a compression scheme; and
    wherein the logical data unit is adapted for containing the compressed channel state information for transmission.

2.  Mobile communication device according to the preceding claim,
    wherein the size of the logical data unit reflects the occurrence of multiple strongest interferers.

3.  Mobile communication device according to any one of the preceding claims,
    wherein the logical data unit is adapted to be first filled with channel state information of the strongest channel component and then subsequently to be filled with channel state information of channel state components that are increasingly less strong until the logical data unit is completely or at least almost filled or until no further information has to be included.

4.  Mobile communication device according to claim 3,
    wherein a component that was not reported for a prolonged of the longest time in previous reports gets higher or highest priority for inclusion into the logical data unit.

5.  Mobile communication device according any one of the preceding claims,
    wherein the size of the logical data unit is semi-statically set by a network node.

6.  Network node (18) for use in a system employing coordinated multipoint transmission, comprising

    a sending and receiving unit (14);
    wherein the sending and receiving unit (14) is adapted for the transmission of a signal pattern over a communication channel (16);
    wherein the signal pattern comprises a logical data unit having a predetermined size adapted to long-term channel characteristics of a mobile communication device (10);
    wherein the logical data unit comprises compressed channel state information; and
    wherein the network node (18) is adapted to receive the signal pattern comprising the logical data unit from the mobile communication device (10).

7.  Network node according to the preceding claim,

    wherein the network node (18) is couplable with a communication system (22); and
    wherein the network node (18) is adapted to signal the received information to at least one further network node (18) of the communication system (22).

8.  Network node according to any one of claims 6 to 7, further configured to set the size of the logical data unit semi-statically at the mobile communication device.

9.  Method (40) for a mobile communication device (10) in a system employing coordinated multipoint transmission, comprising

determining (42), by a determination unit, channel state information for a transmission between the mobile communication device (10) and a network node (18); wherein the transmission comprises a logical data unit having a predetermined size adapted to long-term channel characteristics of the mobile communication device; generating (44), by a processing unit (12) using a compression scheme, compressed information comprising the channel state information; and

transmitting (46) the logical data unit containing the compressed channel state information by a sending and receiving unit (14).

10. Method according to the preceding claim, wherein the size of the logical data unit reflects the occurrence of multiple strongest interferers .

11. Method according to any of the preceding claims 9 to 10, wherein the logical data unit is first filled with channel state information of the strongest channel component and then subsequently filled with channel state information of channel state components that are increasingly less strong until the logical data unit is completely or at least almost filled or until no further information has to be included..

12. Method according to claim 11, wherein a component that was not reported for a prolonged of the longest time in previous reports gets higher or highest priority for inclusion into the logical data unit.

13. Method according to any one of claims 9 to 12, wherein the size of the logical data unit is semi-statically set by a network node.

14. Method (50) for a network node (18) in a system employing coordinated multipoint transmission, comprising receiving (52), by a sending and receiving unit (14), a transmission from a mobile communication device (10) comprising a logical data unit having a predetermined size adapted to long-term channel characteristics of the mobile communication device containing compressed channel state information.

15. Method according to the preceding claim further comprising, signaling the received information to at least one further network node of the communication system (22).

16. Method according to claim 14 or 15, further comprising setting the size of the logical data unit semi-statically at the mobile communication device

17. Computer readable medium, comprising program code, which program code is adapted, when being executed by a processor, to carry out the method according to any of claims 9 to 16.

**Patentansprüche**

1. Mobile Kommunikationsvorrichtung (10) zur Verwendung in einem System, das eine koordinierte Mehrpunktübertragung verwendet, umfassend:

eine Sende- und Empfangseinheit (14); und
eine Verarbeitungseinheit (12);
wobei die Sende- und Empfangseinheit (14) für die Übertragung eines Signalmusters über einen Kommunikationskanal (16) geeignet ist;
wobei das Signalmuster eine logische Dateneinheit mit einer vorherbestimmten Größe umfasst, die für langfristige Kanalcharakteristiken der mobilen Kommunikationsvorrichtung (10) geeignet ist;
wobei die Verarbeitungseinheit (12) für das Komprimieren von Kanalzustandsinformationen vor der Übertragung unter Verwendung eines Kompressionsschemas geeignet ist; und
wobei die logische Dateneinheit geeignet ist, die komprimierten Kanalzustandsinformationen zur Übertragung zu enthalten.

2. Mobile Kommunikationsvorrichtung nach dem vorhergehenden Anspruch, wobei die Größe der logischen Dateneinheit das Auftreten mehrfacher stärkster Störer reflektiert.

**3.** Mobile Kommunikationsvorrichtung nach einem der vorhergehenden Ansprüche, wobei die logische Dateneinheit geeignet ist, zuerst mit Kanalzustandsinformationen der stärksten Kanalkomponente gefüllt zu werden, und dann anschließend mit Kanalzustandsinformationen der Kanalzustandskomponenten gefüllt zu werden, die zunehmend weniger stark sind, bis die logische Dateneinheit vollständig oder mindestens nahezu gefüllt ist oder bis keine weiteren Informationen eingeschlossen werden müssen.

**4.** Mobile Kommunikationsvorrichtung nach Anspruch 3, wobei eine Komponente, die nicht für eine verlängerte der längsten Zeit in vorherigen Berichten gemeldet wurde, eine höhere oder höchste Priorität für den Einschluss in die logische Dateneinheit erhält.

**5.** Mobile Kommunikationsvorrichtung nach einem der vorhergehenden Ansprüche, wobei die Größe der logischen Dateneinheit semi-statistisch von einem Netzknoten eingestellt wird.

**6.** Netzknoten (18) zur Verwendung in einem System, das eine koordinierte Mehrpunktübertragung verwendet, umfassend:

eine Sende- und Empfangseinheit (14);
wobei die Sende- und Empfangseinheit (14) für die Übertragung eines Signalmusters über einen Kommunikationskanal (16) geeignet ist;
wobei das Signalmuster eine logische Dateneinheit mit einer vorherbestimmten Größe umfasst, die für langfristige Kanalcharakteristiken einer mobilen Kommunikationsvorrichtung (10) geeignet ist;
wobei die logische Dateneinheit komprimierte Kanalzustandsinformationen umfasst; und
wobei der Netzknoten (18) geeignet ist, das Signalmuster, das die logische Dateneinheit umfasst, von der mobilen Kommunikationsvorrichtung (10) zu empfangen.

**7.** Netzknoten nach dem vorhergehenden Anspruch, wobei der Netzknoten (18) mit einem Kommunikationssystem koppelbar (22) ist; und wobei der Netzknoten (18) geeignet ist, die empfangenen Informationen an mindestens einen weiteren Netzknoten (18) des Kommunikationssystems (22) zu signalisieren.

**8.** Netzknoten nach einem der Ansprüche 6 bis 7, welcher ferner ausgelegt ist, die Größe der logischen Dateneinheit semi-statistisch in der mobilen Kommunikationsvorrichtung einzustellen.

**9.** Verfahren (40) für eine mobile Kommunikationsvorrichtung (10) in einem System, das eine koordinierte Mehrpunktübertragung verwendet, umfassend:

Bestimmen (42), durch eine Bestimmungseinheit, von Kanalzustandsinformationen für eine Übertragung zwischen der mobilen Kommunikationsvorrichtung (10) und einem Netzknoten (18);
wobei die Übertragung eine logische Dateneinheit mit einer vorherbestimmten Größe umfasst, die für langfristige Kanalcharakteristiken der mobilen Kommunikationsvorrichtung geeignet ist;
Generieren (44), durch eine Verarbeitungseinheit (12) unter Verwendung eines Kompressionsschemas, komprimierter Informationen, umfassend die Kanalzustandsinformationen; und
Übertragen (46) der logischen Dateneinheit, welche die komprimierten Kanalzustandsinformationen enthält, durch eine Sende- und Empfangseinheit (14) .

**10.** Verfahren nach dem vorhergehenden Anspruch, wobei die Größe der logischen Dateneinheit das Auftreten mehrfacher stärkster Störer reflektiert.

**11.** Verfahren nach einem der vorhergehenden Ansprüche 9 bis 10, wobei die logische Dateneinheit zuerst mit Kanalzustandsinformationen der stärksten Kanalkomponente gefüllt wird, und dann anschließend mit Kanalzustandsinformationen der Kanalzustandskomponenten gefüllt wird, die zunehmend weniger stark sind, bis die logische Dateneinheit vollständig oder mindestens nahezu gefüllt ist oder bis keine weiteren Informationen eingeschlossen werden müssen.

**12.** Verfahren nach Anspruch 11, wobei eine Komponente, die nicht für eine verlängerte der längsten Zeit in vorherigen Berichten gemeldet wurde, eine höhere oder höchste Priorität für den Einschluss in die logische Dateneinheit erhält.

**13.** Verfahren nach einem der Ansprüche 9 bis 12,
wobei die Größe der logischen Dateneinheit semi-statistisch von einem Netzknoten eingestellt wird.

**14.** Verfahren (50) für einen Netzknoten (18) in einem System, das eine koordinierte Mehrpunktübertragung verwendet, umfassend:
Empfangen (52), durch eine Sende- und Empfangseinheit (14), einer Übertragung von einer mobilen Kommunikationsvorrichtung (10), welche eine logische Dateneinheit mit einer vorherbestimmten Größe umfasst, die für langfristige Kanalcharakteristiken der mobilen Kommunikationsvorrichtung geeignet ist, enthaltend komprimierte Kanalzustandsinformationen.

**15.** Verfahren nach dem vorhergehenden Anspruch,
ferner umfassend: Signalisieren der empfangenen Informationen an mindestens einen weiteren Netzknoten des Kommunikationssystems (22).

**16.** Verfahren nach Anspruch 14 oder 15,
ferner umfassend: Einstellen der Größe der logischen Dateneinheit semi-statistisch in der mobilen Kommunikationsvorrichtung.

**17.** Computerlesbares Medium, umfassend Programmcode, wobei der Programmcode geeignet ist, wenn dieser von einem Prozessor ausgeführt wird, das Verfahren nach einem der Ansprüche 9 bis 16 durchzuführen.

## Revendications

**1.** Dispositif de communication mobile (10) destiné à être utilisé dans un système employant une transmission multipoint coordonnée, comprenant

une unité d'envoi et de réception (14) ; et
une unité de traitement (12) ;
dans lequel l'unité d'envoi et de réception (14) est conçue pour la transmission d'un motif de signal sur un canal de communication (16) ;
dans lequel le motif de signal comprend une unité de données logiques ayant une taille prédéterminée conçue pour des caractéristiques de canal à long terme du dispositif de communication mobile (10) ;
dans lequel l'unité de traitement (12) est conçue pour compresser des informations d'état de canal avant une transmission à l'aide d'un schéma de compression ; et
dans lequel l'unité de données logiques est conçue pour contenir les informations d'état de canal compressées pour une transmission.

**2.** Dispositif de communication mobile selon la revendication précédente,
dans lequel la taille de l'unité de données logiques reflète l'apparition de multiples brouilleurs les plus forts.

**3.** Dispositif de communication mobile selon l'une quelconque des revendications précédentes,
dans lequel l'unité de données logiques est conçue pour être d'abord remplie d'informations d'état de canal du composant de canal le plus fort et, par la suite, pour être remplie d'informations d'état de canal de composants d'état de canal qui sont de moins en moins forts jusqu'à ce que l'unité de données logiques soit complètement, ou au moins presque, remplie ou jusqu'à ce qu'aucune information supplémentaire ne doive être incluse.

**4.** Dispositif de communication mobile selon la revendication 3,
dans lequel un composant qui n'a pas été signalé pendant un moment prolongé du moment le plus long dans des précédents rapports obtient une priorité plus haute ou la plus haute priorité pour une inclusion dans l'unité de données logiques.

**5.** Dispositif de communication mobile selon l'une quelconque des revendications précédentes,
dans lequel la taille de l'unité de données logiques est définie de manière semi-statique par un noeud de réseau.

**6.** Noeud de réseau (18) destiné à être utilisé dans un système employant une transmission multipoint coordonnée, comprenant

une unité d'envoi et de réception (14) ;
dans lequel l'unité d'envoi et de réception (14) est conçue pour la transmission d'un motif de signal sur un canal de communication (16) ;
dans lequel le motif de signal comprend une unité de données logiques ayant une taille prédéterminée conçue pour des caractéristiques de canal à long terme d'un dispositif de communication mobile (10) ;
dans lequel l'unité de données logiques comporte des informations d'état de canal compressées ; et
le noeud de réseau (18) étant conçu pour recevoir le motif de signal comprenant l'unité de données logiques en provenance du dispositif de communication mobile (10).

7. Noeud de réseau selon la revendication précédente,

le noeud de réseau (18) pouvant être couplé à un système de communication (22) ; et
le noeud de réseau (18) étant conçu pour signaler les informations reçues à au moins un noeud de réseau supplémentaire (18) du système de communication (22) .

8. Noeud de réseau selon l'une quelconque des revendications 6 à 7, configuré en outre pour définir la taille de l'unité de données logiques de manière semi-statique au niveau du dispositif de communication mobile.

9. Procédé (40) pour un dispositif de communication mobile (10) dans un système employant une transmission multipoint coordonnée, comprenant

la détermination (42), par une unité de détermination, d'informations d'état de canal pour une transmission entre le dispositif de communication mobile (10) et un noeud de réseau (18) ;
dans lequel la transmission comprend une unité de données logiques ayant une taille prédéterminée conçue pour des caractéristiques de canal à long terme du dispositif de communication mobile ;
la génération (44), par une unité de traitement (12) utilisant un schéma de compression, d'informations compressées comportant les informations d'état de canal ; et
la transmission (46) de l'unité de données logiques contenant les informations d'état de canal compressées au moyen d'une unité d'envoi et de réception (14) .

10. Procédé selon la revendication précédente,
dans lequel la taille de l'unité de données logiques reflète l'apparition de multiples brouilleurs les plus forts.

11. Procédé selon l'une quelconque des revendications 9 et 10,
dans lequel l'unité de données logiques est d'abord remplie d'informations d'état de canal du composant de canal le plus fort et, par la suite, remplie d'informations d'état de canal de composants d'état de canal qui sont de moins en moins forts jusqu'à ce que l'unité de données logiques soit complètement, ou au moins presque, remplie ou jusqu'à ce qu'aucune information supplémentaire ne doive être incluse.

12. Procédé selon la revendication 11,
dans lequel un composant qui n'a pas été signalé pendant un moment prolongé du moment le plus long dans des précédents rapports obtient une priorité plus haute ou la plus haute priorité pour une inclusion dans l'unité de données logiques.

13. Procédé selon l'une quelconque des revendications 9 à 12,
dans lequel la taille de l'unité de données logiques est définie de manière semi-statique par un noeud de réseau.

14. Procédé (50) pour un noeud de réseau (18) dans un système employant une transmission multipoint coordonnée, comprenant
la réception (52), par une unité d'envoi et de réception (14), d'une transmission en provenance d'un dispositif de communication mobile (10) comprenant une unité de données logiques ayant une taille prédéterminée conçue pour des caractéristiques de canal à long terme du dispositif de communication mobile contenant des informations d'état de canal compressées.

15. Procédé selon la revendication précédente, comprenant en outre la signalisation des informations reçues à au moins un noeud de réseau supplémentaire du système de communication (22).

16. Procédé selon la revendication 14 ou 15, comprenant en outre la définition de la taille de l'unité de données logiques de manière semi-statique au niveau du dispositif de communication mobile.

17. Support lisible par ordinateur, comprenant
    un code de programme, lequel code de programme est conçu, lorsqu'il est exécuté par un processeur, pour mettre en oeuvre le procédé selon l'une quelconque des revendications 9 à 16.

# FIG 1A

# FIG 1B

14a

10

16

14b

12

18

Communication
Network 20

# FIG 2

# FIG 3

per effective radio

| CSI estimation/ interpolation | (linear) CSI Prediction (5ms) | Quantization 0dB=3/4=7 bits -3dB=3/3=6 bits -6dB=2/3=5 bits |

select subband:

18b — 16b — effective radio

18a — 16a

10 — MCD beamformer

Schedule low power &low sensitive UF

Power rise test

Sensitivity test

Interpolate CSI

Combine 2 reports → full f-selectivity

per — Decompress reports

< 2 x 200bit/frame/

generate tracking reports 2 per frame

Calculate tracked CSI

Detect overflow

Skip low priority info: Low SIR channels not scheduled PRBs

Lossless compression

generate full reports every > 10th frame

former reports

EP 2 478 723 B1

# FIG 4

CDF of SIR w/o sensitivity corrections: v=3kmh MSE=0.01PRB=0.5

# FIG 5A

h11: subframe 1 to 9 →

```
0  0  0  0  0  0  0  0  0
0  0  0  0  0  0  0  0  0
0  0  0  0  0  0  0  0  0
0  0 -1  1 -1  1  0 -1  0
0  0  0  0  0  0  0  0  0
0  0  0  0  0  0  0  0  0
0  0  0  0  0  0  0  0  0
0  0  0  0  0  0  0  0  0
0  0  0  0  0  0  0  0  0
0  0  0  0  0  0  0  0  0
0  0  0  0  0  0  0  0 -1
0  0  0  0  0  0  0  0  0
0  0  0  0  0  0  0  0  0
0  0  0  0  0  0  0 -1  1
0  0  0 -1  1  0  0  0  0
0  0  1 -1  0  1  0 -1  1
0  0  0  1 -1  0  1  0  0
0  0  0  0  0  0  0  0  0
0  0  0  0  0  0  0  0  0
0  0  0  0  0  0  0  0  0
```

0: report same PMI again

# FIG 5B

h12: subframe 1 to 9 →

```
0  0  1  0  0  0  0  0  0
0  0  1  0  0  0  0  0  0
0  0  1  0  0  0  0  0  0
0  0  0  1  0  0  0  0  0
0  0  0  0  0  0  0  1  0
0  0  0  0  0  0  0  0  0
0  0  0  0  0  1 -1  0  1
0  0  0  0  0  0  0 -1  0
0  0  0  0  0  0  0  0  0
0  0  0  0  0  0  0  0  0
0  0  0  0  0  0  0  0  0
0  0  0  0  0  0  0  0  0
0  1  0  0  0  0  0  0  0
0  0  0  0  0  0  0  0  1
0  0  0  0  0  0  0  0  0
0  0  0  0  0 -1  1  0  0
0  0  0  0  0  0  0  0  0
0  0  0  0  0  1  0  0  0
0  0  0  0  0  1 -1  1  0
0  0  0  0  0  0  0  0  0
```

# FIG 5C

| exemplary bit allocation ΔR | | | | | |
|---|---|---|---|---|---|
| amplitude/phase | | 4 bit per frame | | | |
| 0 | 0 | 0 | 0 | 0 | 0 |
| 0 | -2 | 0 | 0 | 0 | 1 |
| 0 | -1 | 0 | 0 | 1 | 0 |
| 0 | 1 | 0 | 0 | 1 | 1 |
| 0 | 2 | 0 | 1 | 0 | 0 |
| -1 | -2 | 0 | 1 | 0 | 1 |
| -1 | -1 | 1 | 1 | 1 | 0 |
| -1 | 0 | 0 | 1 | 1 | 1 |
| -1 | 1 | 1 | 0 | 0 | 0 |
| -1 | 2 | 1 | 0 | 0 | 1 |
| 1 | -2 | 1 | 0 | 1 | 0 |
| 1 | -1 | 1 | 0 | 1 | 1 |
| 1 | 0 | 1 | 1 | 0 | 0 |
| 1 | 1 | 1 | 1 | 0 | 1 |
| 1 | 2 | 1 | 1 | 1 | 0 |
| overflow | | 1 | 1 | 1 | 1 |

EP 2 478 723 B1

## FIG 6

| SIR [dB] | #bits amplitude | #bits phase | #bits overall |
|---|---|---|---|
| 0 | 3 | 4 | 7 |
| -3 | 3 | 3 | 6 |
| -6 | 2 | 3 | 5 |
| -9 | 2 | 2 | 4 |
| -12 | 1 | 2 | 3 |
| -15 | 1 | 2 | 3 |

## FIG 7

full report → tracking report SC → tracking report SC → tracking report SC → tracking report SC → full report → tracking report SC → tracking report SC → tracking report SC → tracking report SC → full report

time

# FIG 8

**Overhead OH** (tracking mode only):

Ex1: 3 cells a' 1 virtual AP = 3 components

$$\mathbf{OH(3,1)} = 50*0.3* (2 + 4*(6/7 + 5/7)) = 125\text{bit} / \text{frame} / \text{MCD} = (1.6\text{bit} / \text{PRB} / \text{component})$$

Ex2: 5 cells a' 2 virtual AP = 10 components 3dB difference between strongest IFs

$$\mathbf{OH(5,2)} = 50*0.3 *(2 + 4*(6/7+5/7+4/7+3/7+2/7+2/7+2/7+2/7+2/7) =$$
$$<270\textit{bit} / \textit{frame} / \text{MCD} (1\text{bit/PRB/comp})$$

Ex3: 5 cells a' 2 virtual AP = 10 components: 1dB difference between strongest IFs

$$\mathbf{OH(5,2)} = 50*0.3 *(2 + 4*(7/7 + 5/7 + 4/7 + 3/7 + 2/7 + 2/7 + 2/7 + 2/7 + 2/7) =$$
279*bit* / *frame* / MCD

Quantization of interferer (e.g. according to Fig. 6)

2 bits/Amplitude+2 bits/Phase

only amplitude value for MCD

estimated compression ratio

25 PRB x 2 Reports/PRB

EP 2 478 723 B1

# FIG 9

From full to reduced tracking report

| Comp 1 | Comp 2 | Comp 3 | Comp 4 |
|---|---|---|---|
| PRB 1 | PRB 1 | PRB 1 | PRB 1 |
| PRB 2 | PRB 2 | PRB 2 | PRB 2 |
| PRB 3 | PRB 3 | PRB 3 | PRB 3 |
| | | | |
| | | | |
| | | | |
| | | | |
| | | | |
| | | | |
| | | | |
| | | | |
| | | | |
| PRB n | PRB n | PRB n | PRB n |

$\Rightarrow$

| Comp 1 | Comp 2 | Comp 3 | Comp 4 | Overflow resolution |
|---|---|---|---|---|
| PRB 1 | PRB 1 | PRB 1 | PRB 1 | OF1 |
| PRB 2 | PRB 2 | PRB 2 | PRB 2 | OF2 |
| PRB 3 | PRB 3 | PRB 3 | PRB 3 | |
| | | | | |
| OF1 | | | | |
| | | OF2 | | |
| | | | | |
| | | | | |
| | | | | |
| PRB n | | | | |

variable length, dependent on compression ratio → 2-3 attempts

Fixed size container
Size semi statically configured with optional header

Lossless compression

tracking report 158 bits
OF 6 bits
Self containment 22 bits

# of bits (uncompressed) =50*7*4=1400

$\Rightarrow$ BLER target 10%

# of bits (compressed) = 50*0.3*(2+4*(6/7+5/7+4/7)=158 bits/report

# of bits self containment = 25*3*4*0.3/4=22 bits/report

overall compression factor ~800%

EP 2 478 723 B1

**FIG 10A**

Conventional tracking with 1 bit per component: amplitude / phase or real / imag of complex CSI value

| full report | 1 bit / 1 bit | 1 bit / 1 bit | 1 bit / 1 bit | 1 bit / 1 bit | full report | 1 bit / 1 bit | 1 bit / 1 bit | 1 bit / 1 bit | 1 bit / 1 bit | full report |

2 bit per channel component → time

**FIG 10B**

Code book with size 4 tracking (A+PH)+Lossless compression of overall CSI reports

| full report | 4 bit | 4 bit | 4 bit | 4 bit | full report | 4 bit | 4 bit | 4 bit | 4 bit | full report |

→ time

4 bit per channel component

Lossless compression 300% → 1.2 bit per channel component

**FIG 10C**

Tracking

2 bit per component

↔

Code book tracking + compression

1.2 bit per channel component
phase with increased tracking range: -2,-1, 0, 1, 2
+Overflow detection

EP 2 478 723 B1

## FIG 11A

40

42

44

46

## FIG 11B

50

52